# EUROPÄISCHE PATENTSCHRIFT

(11) **EP 0 531 347 B1**
(45) Veröffentlichungstag und Bekanntmachung des Hinweises auf die Patenterteilung: **09.08.1995**
(21) Anmeldenummer: 91909646.1
(22) Anmeldetag: 21.05.1991
(51) Int. Cl.: G01L 9/06, G01L 9/12, G01L 1/14, G01L 1/18

(54) **MIKROMECHANISCHES BAUELEMENT UND VERFAHREN ZUR HERSTELLUNG DESSELBEN**
MICRO-MECHANICAL COMPONENT AND PROCESS FOR MANUFACTURING IT
COMPOSANT MICROMECANIQUE ET PROCEDE POUR SA FABRICATION

(30) Priorität: 29.05.1990 DE 4017265
(43) Veröffentlichungstag der Anmeldung: 17.03.1993
(73) Patentinhaber: FRAUNHOFER-GESELLSCHAFT ZUR FÖRDERUNG DER ANGEWANDTEN FORSCHUNG E.V., 80636 München (DE)
(72) Erfinder: ZIMMER, Günther, D-4100 Duisburg 29 (DE); MOKWA, Wilfried, D-4150 Krefeld (DE)
(74) Vertreter: Münich, Wilhelm, Dr.
(86) Internationale Anmeldenummer: DE9100415
(87) Internationale Veröffentlichungsnummer: WO9119177

(56) Entgegenhaltungen:
- GB-A- 2 198 611
- ELEKTROTECHNISCHE ZEITSCHRIFT, Band 105, Nr. 15, August 1984, Seiten 792-795,(Berlin, DE); L. CSEPREGI et al.: "Siliziumsensoren - Herstellungs- und Anwendungsmöglichkeiten", siehe Seite 793, Spalten 1,2; Figur 3
- THE GEG JOURNAL OF RESEARCH, Band 5, Nr. 3, 1987, Seiten 189-191, (Chelmsford, Essex, GB); J.E. FALCONER: "Micromachining of silicon for sensor devices", siehe Seite 190, linke Spalte; Figur 2
- SILICON BASED SENSORS FROM A MEETING OF THE INSTRUMENT SCIENCE AND TECHNOLOGYGROUP OF THE INSTITUTE OF PHYSICS, London, 8. Dezember 1986, Seiten 23-43; J.D.BENJAMIN: "Micromachining of silicon by selective anodisation", siehe Seite 37;Figur 7

## Beschreibung

### Technisches Gebiet

Die vorliegende Erfindung bezieht sich auf ein mikromechanisches Bauelement mit einem Tragekörper und einem flach ausgebildeten, parallel zur Oberfläche des Tragekörpers angeordneten deformierbaren Element, das mit einem mechanisch-elektrischen Signalwandler ausgestattet ist, sowie ein Verfahren zur Herstellung desselben.

Mit einem solchen Bauelement können unterschiedliche Sensoren und Aktuatoren verwirklicht werden. Sie dienen beispielsweise dazu, Umweltgrößen wie Druck, Temperatur oder Gaskonzentrationen aber auch Größen wie Beschleunigungen oder Strömungen von Medien in elektrische Signale umzuwandeln. Als Aktuatoren können solche Bauelemente auch als Schalter oder Ventile eingesetzt werden.

Ein gattungsgemäßes Bauelement sowie ein Verfahren zu seiner Herstellung ist aus der Patentschrift US 4 744 863 bekannt geworden. Bei diesem Bauelement handelt es sich um einen Drucksensor mit Membrane, der in planarer Technologie herstellbar ist. Auf einem Siliziumwafer wird eine Abstandsschicht aus Siliziumdioxyd aufgebracht. Darauf wird das Membranmaterial, eine Schicht aus Polysilizium oder Siliziumnitrid abgeschieden. Durch Abscheiden und späteres Wegätzen von schmalen Siliziumdioxydbändern werden Ätzkanäle ausgebildet, die bis zur Abstandsschicht führen. Durch diese Kanäle wird das Material der Abstandsschicht unterhalb der Membrane herausgeätzt, wodurch ein Hohlraum zwischen der Membrane und dem Substrat entsteht. Die Ätzkanäle werden anschließend verschlossen.

Weitere Bauelemente sind aus der DE 39 18 769 A1 und der Patentschrift US 4 670 969 bekannt.

In der Fachveröffentlichung von C.J. Schmidt, P.V. Lenzo und E.G. Spencer, preparation of thin windows in silicon masks for X-ray lithography, Journal of Applied Physics, Vol. 46, 1975, S. 4080 - 4082 wird eine ultradünne Membrane und ein Verfahren zu ihrer Herstellung beschrieben. Die Membrane wird an der Substratvorderseite durch Wegätzen des Substratmaterials von der Rückseite des Wafers her erzeugt. Dies geschieht durch entsprechende Maskierung des Wafers an Vorder- und Rückseite. Um den Ätzprozeß nach Erreichen der gewünschten Membranstärke zu stoppen, wird der Wafer im Membranbereich in einer dünnen Schicht stark dotiert. Die dotierte Schicht wirkt als Ätzstop.

Bei den bekannten Bauelementen wird das deformierbare Element durch die einwirkende, zu messende Größe, verformt, der Grad der Verformung wird zum Beispiel durch aufgebrachte piezoresistive Widerstände oder durch kapazitive Signalwandlung in ein elektrisches Signal umgewandelt.

Wegen der oft sehr kleinen Signalpegel ist es wünschenswert, die Signale direkt auf dem Halbleitersubstrat in unmittelbarer Nähe des deformierbaren Elementes zu verstärken. Eine bewährte und in der Mikroelektronik weit verbreitete Technologie zur Signalverarbeitung ist die CMOS-Technologie.

Die bekannten mikromechanischen Bauelemente eignen sich jedoch nicht zur gemeinsamen Integration mit CMOS-Schaltkreisen. Die Membrane aus Polysilizium bzw. aus stark dotiertem Silizium ist nicht elektrisch von Substratmaterial isoliert und damit leitend mit den CMOS-Schaltkreisen verbunden. Darüberhinaus bestehen die Membrane und das Substrat aus unterschiedlichen Materialien, bzw. aus Materialien stark unterschiedlicher Dotierung, wodurch die Systemintegration erschwert wird.

Eine elektrisch vom Substratmaterial isolierte Membran aus Polysilizium ist in der nicht veröffentlichten Patentanmeldung P 40 04 179.9 des Anmelders beschrieben. Die Isolation wird dadurch erreicht, daß auf ein Halbleitersubstrat vor Aufbringen einer die Membran bildende polykristalline Halbleiterschicht eine Isolatorschicht aufgebracht wird.

Aus "The GEG Journal of Research, Bd. 5, Nr. 3, 1987, Seiten 189 bis 191" ist ein mikromechanisches Bauelement mit einem Tragekörper und flach ausgebildeten, parallel zur Oberfläche des Tragekörpers und dieser gegenüberliegend angeordneten deformierbaren Elementen bekannt, wobei der Tragekörper und die genannten Elemente einstückig aus einem Halbleitersubstrat gefertigt sind, bekannt. Es ist allerdings nicht ersichtlich, die deformierbaren Elemente gegenüber dem Tragekörper elektrisch gegeneinander zu isolieren.

### Darstellung der Erfindung

Der Erfindung liegt die Aufgabe zugrunde, ein mikromechanisches Bauelement anzugeben, das sich für die gemeinsame Integration mit MOS-Schaltkreisen eignet, sowie ein Verfahren zur Herstellung desselben, anzugeben.

Diese Aufgabe wird bei einem gattungsgemäßen Bauelement dadurch gelöst, daß der Tragekörper und das deformierbare Element, das sich parallel zur Oberfläche des Tragekörpers erstreckt und dieser gegenüberliegend angeordnet ist, einstückig aus einem Halbleitersubstrat gefertigt und elektrisch voneinander isoliert sind.

Eine Herstellverfahren für ein derartiges Element ist im Anspruch 13 angegeben.

Die vorgesehene elektrische Isolation erfolgt dadurch, daß in einem vorgebbaren Abstand von der Substratoberfläche eine vergrabene, isolierende Schicht erzeugt wird. Diese vergrabene Schicht kann beispielsweise dadurch hergestellt werden, daß in einer Oberfläche eines ersten Substrats eine isolierende Schicht, beispielsweise eine Oxidschicht erzeugt wird, und das erste Substrat mittels eines Bonding-Verfahrens mit einem zweiten Substrat verbunden wird. Ein bevorzugtes Herstellverfahren für die vergrabene Schicht ist im Anspruch 14 angegeben.

Das deformierbare Element wird durch teilweises oder vollständiges Entfernen dieser Schicht gebildet. Der Tragekörper und das deformierbare Element bestehen aus demselben Material, das auch diesselbe Dotierung aufweist. Da das deformierbare Element somit dieselben elektrischen Eigenschaften aufweist, wie das Substrat, ist es ohne Modifizierung für die Integration von Siliziumschaltkreisen geeignet, wodurch die Systemintegration wesentlich vereinfacht wird.

Vorteilhafte Weiterbildungen der Erfindung sind in den abhängigen Ansprüchen angegeben.

Nach Anspruch 2 besteht das Halbleitersubstrat aus einem in der Mikroelektronik weit verbreiteten Ausgangsmaterial, nämlich Silizium.

Eine besonders vorteilhafte Weiterbildung der Erfindung ist im Anspruch 3 gekennzeichnet. Die mechanisch-elektrische Signalwandlung erfolgt mit Hilfe eines Kondensators, der durch einen variablen Plattenabstand eine variable Kapazität aufweist, die von der Deformation des deformierbaren Elementes abhängt. Der Plattenkondensator ist mit CMOS-Schaltungselementen kompatibel und damit für eine Systemintegration geeignet.

Um den Einfluß der elektrischen Verhältnisse im Halbleitersubstrat auf die Messung der Kapazität auszuschalten, ist der die Gegenelektrode bildende Bereich des Tragekörpers nach Anspruch 4 elektrisch vom Substrat isoliert.

Gemäß Anspruch 5 ist aber auch eine Signalwandlung mit Hilfe eines piezoresistiven Widerstandes möglich. Der piezoresistive Widerstand kann beispielsweise durch lokale Dotierung im deformierbaren Element erzeugt werden, wobei lediglich die Gegenelektrode von dem Tragekörper und von dem deformierbaren Element elektrisch isoliert ist.

Der Meßbereich des Bauelementes hängt wesentlich von der Masse des deformierbaren Elementes ab. Durch die Tiefe, in der die vergrabene Schicht unterhalb der Oberfläche beginnt, kann die Dicke des deformierbaren Elementes und damit seine Masse festgelegt werden. Die Masse kann nach Anspruch 6 auch durch Aufbringen einer Schicht, beispielsweise aus einkristallinen Silizium durch Epitaxie, aus Polysilizium oder Metall, erhöht werden. Da bei der Epitaxie die Schicht kristallin aufwächst, bleibt das deformierbare Element bei dieser Verstärkung in seiner gesamten Dicke einkristallin.

Das erfindungsgemäße Bauelement kann je nach Ausgestaltung sehr vielseitig eingesetzt werden. Nach Anspruch 7 ist das deformierbare Element als Membrane ausgebildet und damit zur Druckmessung, insbesondere Schalldruck- oder Staudruck, geeignet. Wenn ein monokristalliner Si-Wafer als Tragekörper verwendet wird, ist auch die Membrane monokristallin.

Gemäß Anspruch 8 schließen die Membrane und der Tragekörper einen dichten Hohlraum ein. Die derart ausgestaltete Weiterbildung findet für die Messung hydrostatischer Drükke Anwendung.

Das mikromechanische Bauelement nach Anspruch 9 weist ein als Balken ausgebildetes deformierbares Element auf. Mit Hilfe dieses Bauelementes werden beispielsweise Winkellagen-Änderungen gemessen. Zur Messung linearer Beschleunigungen dient das Bauelement mit einseitig freitragender Zunge gemäß Anspruch 10. Dabei kann eine beliebige Beschleunigungsrichtung selektiv bestimmt werden.

Eine vorteilhafte Weiterbildung ist im Anspruch 11 gekennzeichnet. Danach weist ein mikromechanisches Bauelement mehrere deformierbare Elemente auf. Die Aneinander-reihung mehrer Elemente kann z.B. zur Erhöhung des Ausgangssignals dienen. Die Elemente können aber auch so geschaltet werden, daß jeder Meßwert getrennt erfaßt wird, um eine räumliche Verteilung der Meßgrößen zu erhalten.

Gemäß Anspruch 11 werden das mikromechanische Bauelement und die elektronische Schaltung zur Auswertung des elektrischen Signals in einen Halbleiterwafer integriert. Damit wird der höchste Grad an Miniaturisierung erreicht. Auf einem Wafer können mehrere identische Bauelemente gleichzeitig hergestellt werden, wodurch die Herstellungskosten gering gehalten werden.

Vorteilhafte Weiterbildungen des Verfahrens zur Herstellung eines mikromechanischen Bauelementes sind in den Ansprüchen 14 bis 21 angegeben.

Die wesentlichen Vorteile der Erfindung liegen insbesondere darin, daß das mikromechanische Bauelement für eine Systemintegration mikromechanischer und mikroelektronischer Komponenten besonders gut geeignet ist. Dadurch wird der Grad der Miniaturisierung erhöht, die Herstellung vereinfacht und die Zuverlässigkeit des Bauelementes gesteigert. Darüberhinaus gelingt mit dem erfindungsgemäßen Verfahren auch eine Reduzierung der Ausmaße des deformierbaren Elementes, wodurch die Meßempfindlichkeit gesteigert wird. Während bisher ultradünne einkristalline Siliziummembranen mit einer minimalen Dicke von ca. 1,5 »m bekannt geworden sind, können erfindungsgemäße Membranen mit einer Dicke von nur 0,2 »m hergestellt werden.

Im Vergleich zu bekannten Herstellungsverfahren, bei denen ein deformierbares Element durch Rückseitenätzung herausgebildet wird, die Ätzung demnach durch den gesamten Halbleiterkörper hindurch erfolgt, kann die Fläche des deformierbaren Elements mit dem erfindungsgemäßen Verfahren wesentlich verringert werden.

Die erfindungsgemäßen mikromechanischen Bauelemente eignen sich beispielsweise für den Einsatz in der Medizin, Schallmeßtechnik, Hydraulik, Robotik, Land- und Luftverkehr und in der Raumfahrt.

### Kurze Beschreibung der Zeichnung

Ausführungsbeispiele der Erfindung sind in den Zeichnungen dargestellt und werden nachfolgend näher beschrieben. Zur Verdeutlichung sind die Abbildungen nicht maßstabsgerecht gezeichnet. Es zeigen:
- Figur 1: das Implantieren der vergrabenen Schicht,
- Figur 2: schematische Darstellung eines Halbleitersubstrates mit vergrabener Schicht,
- Figure 3: Schnitt durch ein Ausführungsbeispiel eines erfindungsgemäßen Bauelements,
- Figure 4: Schnitt durch ein Ausführungsbeispiel eines erfindungsgemäßen Bauelements,
- Figure 5a: Substrat mit partiell implantierter vergrabener Schicht,
- Figure 5b: Schnitt durch ein Ausführungsbeispiel eines erfindungsgemäßen Bauelements.
- Figure 6: die Herstellung eines Ausführungsbeispiels eines erfindungsgemäßen Bauelements.

### Darstellung von Ausführungsbeispielen

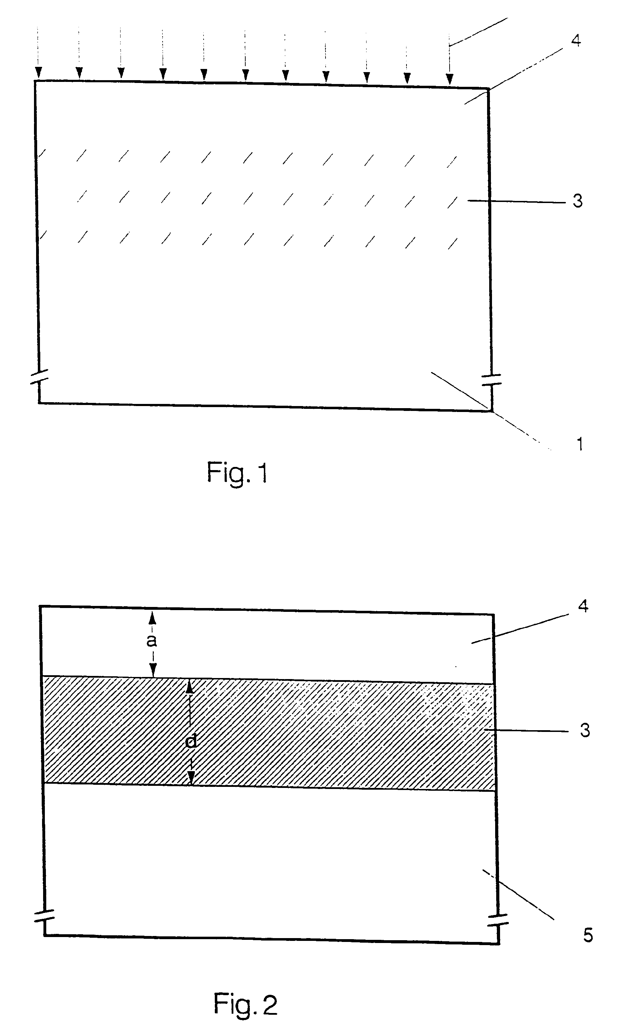

Zur Herstellung eines mikromechanischen Bauelementes in Übereinstimmung mit dem erfindungsgemäßen Herstellungsverfahren werden, wie in Figur 1 dargestellt, Ionen in ein Halbleitersubstrat (1) implantiert. Der Ionenstrahl ist durch die Pfeile (2) angedeutet. Die Energieverteilung der Ionen wird so gewählt, daß sie in eine vorgebbare Tiefe in das Substrat eindringen und dort in einer Schicht (3) chemische Reaktionen im Substrat bewirken. Dadurch entsteht im Substratinneren eine isolierende, vergrabene Schicht (3). Bei einer Implantation von Sauerstoffionen entsteht eine Siliziumdioxidschicht. Ebenso können Stickstoffionen implantiert werden, wodurch eine Siliziumnitritschicht gebildet wird.

Während eines Ausheizvorgangs findet die Reaktion der implantierten Ionen mit dem Silizium statt und es werden die bei der Implantation entstandenen Schäden in der Deckschicht ausgeheilt. Wie die Figur 2 zeigt, teilt die isolierende, vergrabene Schicht (3) das Halbleitersubstrat (1) in die Deckschicht (4), aus der das deformierbare Element gebildet wird und den Tragekörper (5). Der Abstand a der vergrabenen Schicht (3) von der Substratoberfläche bestimmt die Dicke der Deckschicht (4) und damit die Dicke des deformierbaren Elementes. Die Dicke d der vergrabenen Schicht bestimmt den Abstand des deformierbaren Elementes von dem Tragekörper (5).

Die vergrabene Schicht (3) kann beispielsweise einen Abstand a von 0,2 »m von der Substratoberfläche aufweisen, so daß ein deformierbares Element mit einer Dicke von nur 0,2 »m entsteht. Ein typischer Wert für den Abstand des Elementes vom Tragekörper (5) ist 0,4 »m. Mit dem erfindungsgemäßen Verfahren können aber größere Dicken erreicht werden.

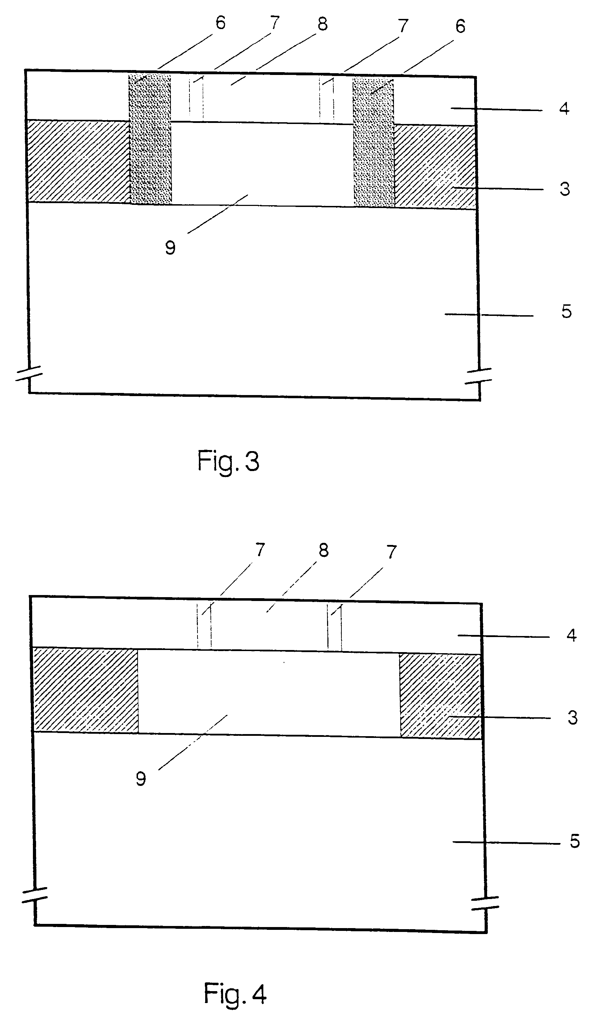

Die Figur 3 zeigt als Ausführungsbeispiel eines erfindungsgemäßen Bauelementes eine Membrane. Zur Herstellung wird um den zukünftigen Membranbereich (8) ein umgebender Graben (6) definiert. In einem anschließenden Ätzprozeß wird das Halbleitermaterial der Deckschicht und das Material der vergrabenen Schicht im Bereich des Grabens entfernt. Der dadurch entstehende Graben (6) wird mit einem Material aufgefüllt, das gegen das Ätzmedium resistent ist, mit welchem in einem anschließenden Verfahrensschritt die vergrabene Schicht (3) im Bereich der Membrane (8) entfernt wird. Als Füllmaterial kann zum Beispiel Polysilizium verwendet werden. Der so aufgefüllte Graben (6) dient als seitlicher Ätzstop.

In die Deckschicht (4) werden mit Hilfe von Standardätzprozessen im Bereich der Membrane (8) Ätzkanäle (7) erzeugt, durch die das Ätzmedium auf das Material der vergrabenen Schicht (3) im Bereich der Membrane (8) einwirken kann. Durch den Ätzvorgang entsteht ein Hohlraum (9) zwischen der Membrane (8) und dem Tragekörper (5). Um den Hohlraum (9) hermetisch zu verschließen, werden die Ätzkanäle beispielsweise durch Abscheiden von Siliziumdioxyd oder von Metall abgedichtet.

Bei dem in Figur 4 gezeigen Ausführungsbeispiel wird auf die Ausbildung eines aufgefüllten Grabens als seitlicher Ätzstop verzichtet. Die Größe des Membranbereiches (6) wird in diesem Fall durch die Wahl einer bestimmten Ätzdauer definiert. Bei beiden beschriebenen Ausführungsbeispielen ist die Deckschicht (4) über dem gesamten Substratquerschnitt von dem Tragekörper (5) durch die vergrabene Schicht (3) elektrisch isoliert. Dadurch ergeben sich bei der gemeinsamen Integration von elektrischen Schaltungen auf demselben Halbleiterkörper alle Vorteile einer "Silicon on Insulator Technology" (SOI) wie Strahlungsfestigkeit, Lach-up-Unempfindlichkeit und Temperaturunempfindlichkeit.

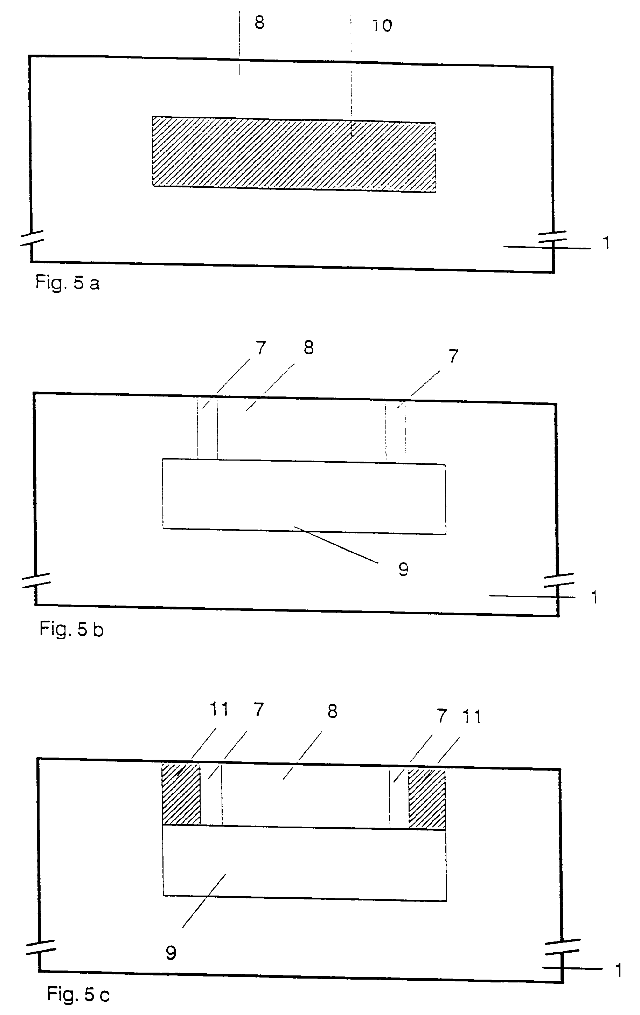

Bei einem weiteren Ausführungsbeispiel wird, wie in den Figuren 5a und 5b gezeigt, die Ionenimplantation nur in einem lokalen Bereich (10) durchgeführt, der gleichzeitig den Bereich der Membrane (8) definiert. Der übrige Bereich des Halbleitersubstrates (1) wird durch geeignete Maskierung abgedeckt. Im Bereich der Membrane (8) werden die Ätzkanäle (7) erzeugt und das Material der vergrabenen Schicht (10) herausgeätzt. Damit ist ein Verfahren angegeben, einen vergrabenen Hohlraum (9) in ein Halbleitersubstrat (1) zu ätzen.

Die übrige Oberflächenschicht des Halbleitersubstrates außerhalb des Membranbereiches (8) kann durch nachträgliche Implantation von Stickstoff oder Sauerstoff gegenüber dem Substrat (1) elektrisch isoliert werden.

Bei einem bevorzugten Ausführungsbeispiel, dargestellt in Figur 5c, erfolgt die elektrische Isolation der Membrane von dem Tragekörper durch lokale Oxidation eines Bereichs 11 der Oberflächenschicht, der die Membrane umschließt. Dieses Ausführungsbeispiel zeichnet sich durch besonders hohe Wirtschaftlichkeit aus.

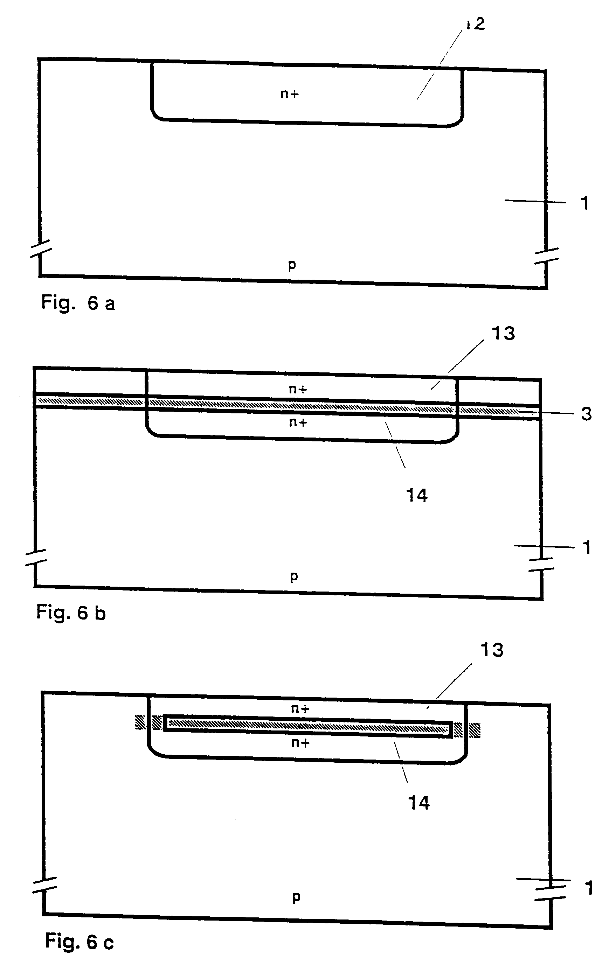

Eine Weiterentwicklung des erfindungsgemäßen Verfahrens ist in den Figuren 6a bis 6c dargestellt. In einem Halbleitersubstrat 1, das beispielsweise p-dotiert ist, wird ein wannenförmiges n⁺ dotiertes Gebiet 12 ausgebildet. Die Wannentiefe ist so gewählt, daß die durch Implanation dargestellte, vergrabene Schicht 3 die Wanne in einen oberen Bereich 13 und einem unteren Bereich 14 teilt. Diese Weiterentwicklung des Verfahrens ist insbesondere vorteilhaft, wenn die Messung der Deformation des deformierbaren Elements gemäß den Ansprüchen 3 und 4 kapazitiv erfolgt. Der als Gegenelektrode wirkende untere Bereich 14 kann durch ein geeignetes Potential am pn-Übergang vom Halbleitersubstrat isoliert werden.

Die Wannentechnik kann wie in Figur 6b gezeigt, mit einer ganzflächigen Implanation oder nach Figur 6c mit einer partiellen Implanation verknüpft werden.

Bei partieller Integration kann die vergrabene Schicht vollständig innerhalb der Wanne liegen. Dann sind die beiden Bereiche 13 und 14 elektrisch leitend miteinander verbunden.

Wenn für den Anwendungsfall zwei elektrisch isolierte Bereiche 13 und 14 vorteilhaft sind, wird die partielle Integration so durchgeführt, daß die vergrabene Schicht über die Wanne hinausragt.

Durch Einwirken einer zu messenden Größe wird das deformierbare Element, im Falle der Ausführungsbeispiele die Membrane (9), verformt. Die Größe der Verformung läßt sich beispielsweise kapazitiv bestimmen. Da die Membrane (9) vom Tragekörper (5) elektrisch isoliert ist, kann dazu die Änderung der Kapazität des durch die Membrane (9) und den der Membrane gegenüberliegenden Bereich des Tragekörpers (5) gebildeten Kondensator gemessen werden. Im einfachsten Fall genügt eine geeignete Kontaktierung der Deckschicht (4) und des Tragekörpers (5). Die Größe der Verformung kann auch durch Aufbringen piezoresistiver Widerstände in die Membrane bestimmt werden.

## Patentansprüche

1. Mikromechanisches Bauelement mit einem Tragekörper (5) und einem flach ausgebildeten, parallel zur Oberfläche des Tragekörpers (5) und dieser gegenüberliegend angeordneten deformierbaren Element, das mit einem mechanisch-elektrischen Signalwandler ausgestattet ist, dadurch **gekennzeichnet,** daß der Tragekörper (5) und das deformierbare Element einstückig aus einem Halbleitersubstrat (1) gefertigt sind, und daß der Tragekörper (5) und das deformierbare Element elektrisch gegeneinander isoliert sind.

2. Mikromechanisches Bauelement nach Anspruch 1, dadurch **gekennzeichnet,** daß das Halbleitersubstrat (1) ein Siliziumwafer ist.

3. Mikromechanisches Bauelement nach Anspruch 1 oder 2, dadurch **gekennzeichnet,** daß der mechanisch-elektrische Signalwandler als Plattenkondensator mit variablem Plattenabstand ausgebildet ist, wobei eine Elektrode des Kondensators durch das deformierbare Element und die Gegenelektrode durch einen dem deformierbaren Element gegenüberliegenden Bereich des Tragekörpers (5), gebildet werden.

4. Mikromechanisches Bauelement nach Anspruch 3, dadurch **gekennzeichnet,** daß die Gegenelektrode von dem Tragekörper (5) und von dem deformierbaren Element elektrisch isoliert ist.

5. Mikromechanisches Bauelement nach Anspruch 1 oder 2, dadurch **gekennzeichnet,** daß der mechanisch-elektrische Signalwandler durch einen auf das deformierbare Element aufgebrachten piezoresistiven Widerstand gebildet wird.

6. Mikromechanisches Bauelement nach einem der Ansprüche 1 bis 5, dadurch **gekennzeichnet,** daß auf dem deformierbaren Element eine Schicht aufgebracht ist.

7. Mikromechanisches Bauelement nach einem der Ansprüche 1 bis 6, dadurch **gekennzeichnet,** daß das deformierbare Element als Membrane (8) ausgebildet ist.

8. Mikromechanisches Bauelement nach Anspruch 7, dadurch **gekennzeichnet,** daß die Membrane (8) und der Tragekörper (5) einen hermetisch verschlossenen Hohlraum (9) einschließen, der evakuiert ist oder eine vorgebbare Gasmenge enthält.

9. Mikromechanisches Bauelement nach einem der Ansprüche 1 bis 6, dadurch **gekennzeichnet,** daß das deformierbare Element als Balken ausgebildet ist.

10. Mikromechanisches Bauelement nach einem der Ansprüche 1 bis 6, dadurch **gekennzeichnet,** daß das deformierbare Element als einseitig freitragende Zunge ausgebildet ist.

11. Mikromechanisches Bauelement nach einem der Ansprüche 1 bis 10, dadurch **gekennzeichnet,** daß das Bauelement mehrere deformierbare Elemente aufweist.

12. Mikromechanisches Bauelement nach einem der Ansprüche 1 bis 11, dadurch **gekennzeichnet,** daß ein oder mehrere mikromechanische Bauelemente gemeinsam mit elektronischen Schaltkreisen in einem Halbleiterwafer integriert sind.

13. Verfahren zur Herstellung eines mikromechanischen Bauelementes mit einem Tragekörper (5) und einem flach ausgebildeten, parallel zum Tragekörper (5) angeordneten deformierbaren Element, ausgehend von einem einkristallinen Halbleitersubstrat (1), dadurch **gekennzeichnet,** daß der Tragekörper (5) und das deformierbare Element einstückig aus dem Halbleitersubstrat (1) gefertigt werden, wobei in dem Halbleitersubstrat (1) eine vergrabene Isolationsschicht (3) erzeugt wird, die als Ätz-Stoppschicht dient oder die bei der Herstellung wenigstens teilweise weggeätzt wird.

14. Verfahren nach Anspruch 13, **gekennzeichnet** durch folgende Verfahrensschritte: durch lokale Implantation von Ionen wird in einem vorgebbaren Abstand unterhalb der Oberfläche des Halbleitersubstrates eine vergrabene Schicht (3) aus einer isolierenden Verbindung erzeugt,
durch einen Ausheizvorgang wird die über dieser Schicht (3) verbleibende einkristalline Halbleiterdeckschicht ausgeheilt,
aus der Halbleiterdeckschicht (4) werden an vorgebbaren Stellen Ätzkanäle (7) geätzt,
mit Hilfe eines selektiv wirkenden Ätzmediums wird die vergrabene Schicht (3) in durch die Wahl der Ätzkanäle (7) und die Ätzdauer bestimmbaren Bereichen weggeätzt.

15. Verfahren nach Anspruch 14, dadurch **gekennzeichnet,** daß vor dem Ätzen der Ätzkanäle (7) durch Photolithographie um den Bereich des deformierbaren Elementes ein umgebender Graben (6) definiert wird, und daß im Bereich des Grabens (6) die Halbleiterdeckschicht (4) und die darunterliegende vergrabene Schicht (3) weggeätzt wird, daß der entstandene Graben (6) mit einem gegen das selektiv wirkende Ätzmedium resistenten Material ausgefüllt wird.

16. Verfahren nach Anspruch 14 oder 15, dadurch **gekennzeichnet,** daß die vergrabene Schicht (3) nur in einem lokalen Bereich erzeugt wird, wobei die Waferoberfläche außerhalb dieses Bereiches durch Maskierung abgedeckt wird und daß die Oberflächenschicht des Halbleitersubstrates (1) außerhalb des deformierbaren Elementes durch Implantation von Ionen gegenüber dem Tragekörper (5) elektrisch isoliert wird, wobei der Bereich des deformierbaren Elements maskiert wird.

17. Verfahren nach Anspuch 16, dadurch **gekennzeichnet,** daß die elektrische Isolation des deformierbaren Elements von dem Tragekörper (5) durch lokale Oxidation der Oberflächenschicht in einem das Element umschließenden Bereich erfolgt.

18. Verfahren nach einem der Ansprüche 13 bis 17, dadurch **gekennzeichnet,** daß die Geometrie des deformierbaren Elementes durch Photolithographie definiert wird.

19. Verfahren nach einen der Ansprüce 13 bis 18, dadurch **gekennzeichnet,** daß die vergrabene Schicht (3) durch Implantation von Sauerstoffionen erzeugt wird und aus Siliziumdioxyd besteht.

20. Verfahren nach einem der Ansprüche 13 bis 19, dadurch **gekennzeichnet,** daß die vergrabene Schicht (3) durch Implantation von Stickstoffionen erzeugt wird und aus Siliziumnitrid besteht.

21. Verfahren nach einem der Ansprüche 13 bis 20, dadurch **gekennzeichnet,** daß in einem Halbleitersubstrat (1) einer ersten Leitfähigkeit vor der lokalen Implantation zur Erzeugung der vergrabenen Schicht (3) ein wannenförmiges Gebiet (12) einer zweiten, der ersten entgegengesetzten Leitfähigkeit erzeugt wird, das durch die vergrabene Schicht (3) zumindest teilweise in zwei parallel zur Oberfläche verlaufende Bereiche geteilt wird.

## Claims

1. Micro-mechanical device comprising a supporting body (5) and a deformable element of flat shape which extends in parallel with the surface of said supporting body (5) in opposition thereto and which is equipped with a mechanico-electrical signal transformer, **characterized** in that said supporting body (5) and said deformable element are integrally made from a semiconductor substrate (1), and that said supporting body (5) and said deformable element are electrically insulated from each other.

2. Micro-mechanical device according to Claim 1, **characterized** in that said semiconductor substrate (1) is a silicon wafer.

3. Micro-mechanical device according to Claim 1 or 2, **characterized** in that said mechanico-electrical signal transformer is configured as a plate capacitor having a variable plate spacing, wherein one electrode of said capacitor is formed by said deformable element whereas the counter electrode is formed by an area of said supporting body (5) opposite to said deformable element.

4. Micro-mechanical device according to Claim 3, **characterized** in that said counter electrode is electrically insulated from said supporting body (5) and said deformable element.

5. Micro-mechanical device according to Claim 1 or 2, **characterzed** in that said mechanico-electrical transformer is formed by a piezoresistive resistor applied on said deformable element.

6. Micro-mechanical device according to any of Claims 1 to 5, **characterized** in that a layer is applied on said deformable element.

7. Micro-mechanical device according to any of Claims 1 to 6 **characterized** in that said deformable element is designed as membrane (8).

8. Micro-mechanical device according to Claim 7, **characterized** in that said membrane (8) and said supporting body (5) define a hermetically sealed cavity (9) which is either evacuated or which contains a definable quantity of gas.

9. Micro-mechanical device according to any of Claims 1 to 6, **characterized** in that said deformable element is provided in the form of a beam.

10. Micro-mechanical device according to any of Claims 1 to 6, **characterized** in that said deformable element is designed as unilaterally cantilever tongue.

11. Micro-mechanical device according to any of Claims 1 to 10, **characterized** in that the device comprises a plurality of deformable elements.

12. Micro-mechanical device according to any of Claims 1 to 11, **characterized** in that one or several micro-mechanical devices are integrated together with electronic circuits in a semiconductor wafer.

13. Method of manufacturing a micro-mechanical device comprising a supporting body (5) and a deformable element of flat shape which extends in parallel with said supporting body (5), starting out from a monocrystalline semiconductor substrate (1),
**characterized** in that said supporting body (5) and said deformable element are integrally produced from said semiconductor substrate (1), with a buried insulating layer (3) being produced in said semiconductor substrate (1), which then serves as layer stopping the etching process or which is etched off, at least partially, in the course of the manufacturing process.

14. Method according to Claim 13, **characterized** by the following steps:
by local ion implantation, a buried layer (3) is produced from an insulating compound in a definable spacing below the surface of said semiconductor substrate,
the monocrystalline semiconductor top layer remaining above this layer (3) is self-sealed by a baking operation,
etching passages (7) are etched from said semiconductor top layer (4) at definable locations,
said buried layer (3) is etched off in areas which may be determined by the selection of said etching passages (7) and by the etching period, by means of a selectively effective etching medium.

15. Method according to Claim 14, **characterized** in that prior to etching of said etching passages (7) a surrounding trough (8) is defined about the region of said deformable element by a photolithographic process, and that said semiconductor top layer (4) and said buried layer (3) therebelow are etched off in the area of said trough (6), and that said trough (6) so created is filled with a material re sistant to said selectively effective etching medium.

16. Method according to Claim 14 or 15, **characterized** in that said buried layer (3) is produced only in a local area, with the surface of the wafer outside this area being covered by masking, and that the surface layer of said semiconductor substrate outside said deformable element is electrically insulated from said supporting body (5) by ion implantation, wherein the area of said deformable element is masked.

17. Method according to Claim 16, **characterized** in that said electrical insulation of said deformable element from said supporting body (5) is carried out by local oxidation of the surface layer in an area enclosing said element.

18. Method according to any of Claims 13 to 17, **characterized** in that the geometry of said deformable element is defined by a photolithographic process.

19. Method according to any of Claims 13 to 18, **characterized** in that said buried layer (3) is produced by implanting oxygen ions and that it consists of silicon dioxide.

20. Method according to any of Claims 13 to 19, **characterized** in that said buried layer (3) is produced by implanting nitrogen ions and that it consists of silicon nitride.

21. Method according to any of Claims 13 to 20, **characterized** in that in a semiconductor substrate (1) of a first conductivity type, prior to the local implantation for production of said buried layer (3), a trough-shaped region (12) of a second conductivity type, inverted to said first type, is produced which is subdivided by said buried layer (3), at least partially, into two sections extending in parallel with the surface.

## Revendications

1. Composant micro-mécanique comprenant un corps-support (5) et un élément déformable à forme plate, qui s'étend en parallèle à la surface dudit corps-support (5) et qui est opposé au dernier, et qui est prévu d'un convertisseur de signaux mécanico-électrique **caractérisé** en ce que ledit corps-support (5) et ledit élément déformable sont intégralement produits d'un substrat semi-conducteur, et en ce que ledit corps-support (5) et ledit élément déformable sont électriquement isolés l'un de l'autre.

2. Composant micro-mécanique selon la revendication 1, **caractérisé** en ce que ledit substrat semi-conducteur (1) est une pastille au silicium.

3. Composant micro-mécanique selon la revendication 1 ou 2, **caractérisé** en ce que ledit convertisseur mécanico-électrique est configuré sous forme d'un condensateur à lames à écart variable, dans lequel une électrode dudit condensateur est formée par ledit élément déformable, pendant que la contre-électrode est formée par une zone dudit corps-support (5) qui est opposée audit élément déformable.

4. Composant micro-mécanique selon la revendication 3, **caractérisé** en ce que ladite contre-électrode est électriquement isolée dudit corps-support (5) et dudit élément déformable.

5. Composant micro-mécanique selon la revendication 1 ou 2, **caractérisé** en ce que ledit convertisseur de signaux mécano-électrique est formé par un résisteur piézorésistif qui est appliqué sur ledit élément déformable.

6. Composant micro-mécanique selon une quelconque des revendications 1 à 5, **caractérisé** en ce qu'une couche est appliquée sur ledit élément déformable.

7. Composant micro-mécanique selon une quelconque des revendications 1 à 6, **caractérisé** en ce que ledit élément déformable est configuré comme une membrane (8).

8. Composant micro-mécanique selon la revendication 7, **caractérisé** en ce que ladite membrane (8) et ledit corps-support (5) définissent une cavité hermétiquement étanche (9), qui est évacuée ou qui contient une quantité définissable de gaz.

9. Composant micro-mécanique selon une quelconque des revendications 1 à 6, **caractérisé** en ce que ledit élément déformable est prévu sous forme d'une barre.

10. Composant micro-mécanique selon une quelconque des revendications 1 à 6, **caractérisé** en ce que ledit élément déformable est formé en tant que lame en porte à faux.

11. Composant micro-mécanique selon une quelconque des revendications 1 à 10, **caractérisé** en ce que le composant comprend une pluralité des éléments déformables.

12. Composant micro-mécanique selon une quelconque des revendications 1 à 11, **caractérisé** en ce qu'un seul ou plusieurs composants micro-mécaniques sont intégrés, ensemble avec des circuits électroniques, dans une pastille semi-conductrice.

13. Procédé de fabrication d'un composant micro-mécanique, comprenant un corps-support (5) et un élément déformable à forme plate, qui s'étend en parallèle audit corps-support (5), d'un substrat semi-conducteur monocristallin (1),
**caractérisé** en ce que ledit corps-support (5) et ledit élément déformable sont intégralement produits dudit substrat semi-conducteur (1), à une couche isolante noyée (3) qui est produite dans ledit substrat semi-conducteur (1), qui sert ensuite comme couche d'arrêt du processus de gravure, ou qui est enlevée par gravure, au moins en partie, au cours du procédé de fabrication.

14. Procédé selon la revendication 13, **caractérisé** par les étapes suivantes:
par implantation locale des ions, on produit une couche noyée (3) d'un composé isolant à un écart définissable au dessous de la surface du substrat semi-conducteur,
la couche semi-conductrice monocristalline supérieure, que reste au dessus de cette couche (3), est auto-étanchéifiée par un processus d'étuvage,
des passages de gravure (7) sont gravés dans ladite couche semi-conductrice supérieure (4) à des endroits définissables,
ladite couche noyée (3) est enlevée par gravure dans des zones qu'on peut déterminer par la chaix desdits passages de gravure (7) ainsi que par le temps de gravure, moyennant un agent de gravure à effet sélectif.

15. Procédé selon la revendication 14, **caractérisé** en ce qu'avant la gravure desdits passages de gravure (7) une gorge (8) est définie qui entoure la région dudit element déformable, moyennant un processus photolithographique, et en ce que ladite couche semi-conductrice supérieure (4) et ladite couche noyée (3) au dessous sont enle vées, par gravure, dans la zone de ladite gorge (6), et que ladite gorge (6) ainsi créée est remplie d'une matière résistante audit agent de gravure à effet sélectif.

16. Procédé selon la revendication 14 ou 15, **caractérisé** en ce que ladite couche noyée (3) n'est produite que dans une zone locale, à la surface de ladite pastille au dehors de cette zone étant couverte par une cache, et en ce que la couche superficielle dudit substrat semi-conducteur, qui est au dehors dudit element déformable, est électriquement isolée dudit corps-support 5) par implantation des ions, dans lequel la zone dudit element déformable est couverte par une cache.

17. Procedé selon la revendication 16, **caractérisé** en ce que ladite isolation électrique entre ledit élément déformable et ledit corps-support (5) est réalisée par oxydation locale de la couche superficielle dans une zone qui entoure ledit élément.

18. Procédé selon une quelconque des revendications 13 à 17, **caractérisé** en ce que la géométrie dudit element déformable est définie par un processus photolithographique.

19. Procédé selon une quelconque des revendications 13 à 18, **caractérisé** en ce que ladite couche noyée (3) est produite par implantation des ions d'oxygène, et en ce qu'elle est faite en silice.

20. Procédé selon une quelconque des revendications 13 à 19, **caractérisé** en ce que ladite couche noyée (3) est produite par implantation des ions d'azote, et en ce qu'elle est faite en nitrure de silicium.

21. Procédé selon une quelconque des revendications 13 à 20, **caractérisé** en ce que dans un substrat semi-conducteur (1) d'un premier type de conductibilité, une zone à forme de gorge (12) d'un deuxième type de conductibilité, inverse au premier type, est formée avant l'implantation locale pour la production de ladite couche noyée (12), laquelle zone est divisée par ladite couche noyée (3), au moins en partie, dans deux parties qui s'étendent en parallèle à la surface.
